# EUROPEAN PATENT APPLICATION

(11) **EP 3 650 716 A1**
(43) Date of publication of application: **13.05.2020**
(21) Application number: 18907478.4
(22) Date of filing: 23.10.2018
(51) Int. Cl.: F16B 39/30

(54) **ANTI-LOOSENING SELF-LOCKING STRUCTURAL MEMBER**

(30) Priority: 14.09.2018 CN 201811072030
(71) Applicant: Suzhou Meet Precision Technology Co., Ltd, Xiangcheng District, Suzhou City, Jiangsu 215143 (CN)
(72) Inventor: HU, Ping, Suzhou City, Juangsu 215143 (CN)
(74) Representative: Cabinet Chaillot
(86) International application number: PCT/CN2018/111408
(87) International publication number: WO 2020/051997

(57) **Abstract**

The invention discloses an anti-loosening and self-locking structural member, which comprises a first threaded section and a second helical elastic deformation section arranged on the structural member, wherein the pitch of threads of the second helical elastic deformation section is identical to that of the first threaded section, and axial sections of the threads of the second helical elastic deformation section take the shape of a thin sheet; and the first threaded section has an axial displacement which is not an integral multiple of the pitch relative to the second helical elastic deformation section. When screwed into a mating internal thread, the second helical elastic deformation section is not helically aligned with the internal thread due to its axial displacement relative to the first threaded section, and the threads having axial sections in the shape of a thin sheet are helically elastically deformed under the action of a further screwing force and then forcibly screwed into the internal thread, thereby achieving frictional anti-loosening and self-locking. The structural member of the invention has a stable self-locking torsion and a high assembly accuracy, can provide a reliable anti-loosening and self-locking torsion, and is not easy to break.

## Description

### FIELD OF THE INVENTION

The invention relates to an anti-loosening and self-locking structural member, and in particular to tuning in tuning and filtering devices such as filters, oscillators and duplexers applied to the fields of communications, electronics and the like.

### BACKGROUND OF THE INVENTION

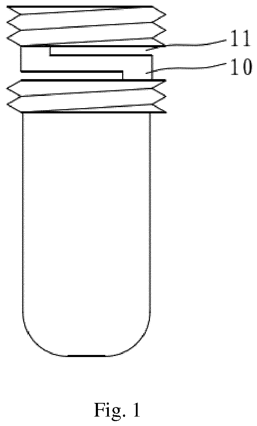

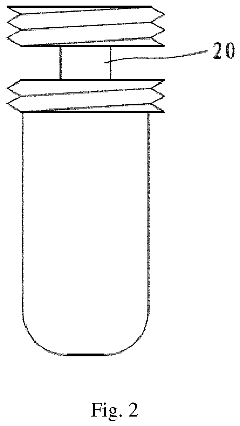

For many existing threaded anti-loosening and self-locking structures, especially self-locking tuning screws for tuning and filtering in filters, oscillators and duplexers in the fields of communications, electronics and the like, a common structure is as shown in Fig. 1, wherein an unthreaded rod section 10 is arranged between two sections of threads, the unthreaded rod section is machined with cutting grooves 11 which are axially symmetrical and mutually staggered to form an elastic deformation section, thereby achieving a frictional self-locking function; and another structure is as shown in Fig. 2, wherein the diameter of an unthreaded rod section 20 between two sections of threads is sufficiently small, and the material of the unthreaded rod section 20 is slightly deformed under the action of an external force to achieve a self-locking function.

The self-locking tuning screws of the above structures have the following disadvantages in practical application: for the structure in Fig. 1, the unthreaded rod section 10 has reduced strength and is easily broken and deformed due to the machining of the two cutting grooves 11; and for the structure in Fig. 2, the unthreaded rod section 20 is not easily deformed under less tension or pressure, but its material is easily yielded under greater tension or pressure to form unstable torsion or even cause breakage, which is difficult to control.

### SUMMARY OF THE INVENTION

An object of the invention is to provide a new self-locking and anti-loosening structure so as to overcome the above disadvantages. During component adjustment or microwave tuning, the structural member can stay in any position and lock itself without loosening. The purposes of convenience in adjustment, no easy breakage, high sensitivity and reliable self-locking can be achieved at the same time.

The invention provides an anti-loosening and self-locking structural member, which comprises a first threaded section and a second helical elastic deformation section arranged on the structural member, wherein the pitch of threads of the second helical elastic deformation section is identical to that of the first threaded section, axial sections of the threads of the second helical elastic deformation section take the shape of a thin sheet, and the outer diameter and thickness of the thin sheet-shaped threads of the second helical elastic deformation section as well as the radial depth of a helical groove between the threads are adjustable; and the first threaded section has an axial displacement which is not an integral multiple of the pitch relative to the second helical elastic deformation section, and the axial displacement may be either shift towards each other or relative shift. When screwed into a mating internal thread, the second helical elastic deformation section is not helically aligned with the internal thread due to its axial displacement relative to the first threaded section, and the threads having axial sections in the shape of a thin sheet are helically elastically deformed under the action of a further screwing force and then forcibly screwed into the internal thread, thereby achieving frictional anti-loosening and self-locking. The structural member of the invention has a stable self-locking torsion and a high assembly accuracy, can provide a reliable anti-loosening and self-locking torsion, and is not easy to break.

In a further preferred embodiment of the invention, a tool recess is also arranged between the first threaded section and the second helical elastic deformation section, and the diameter of the tool recess is smaller than the radial extension diameter of the helical groove of the second helical elastic deformation section. The arrangement of the tool recess facilitates the machining of the first threaded section and the second helical elastic deformation section, and facilitates tool escape and the removal of the burrs of the threads.

Further, the surface of the structural member is provided with an anti-oxidation and lubricating coating.

Preferably, in order to facilitate the screwing of the second helical elastic deformation section into the internal thread, chamfers at the same angle as the thread angle of the first threaded section are machined on outer end portions of the thin sheet-shaped threads of the second helical elastic deformation section.

By employing the above technical solutions, the invention has the following beneficial effects: a section of the second helical elastic deformation section is machined that has an axial displacement which is not an integral multiple of the pitch relative to the first threaded section and that has easily deformed thin sheet-shaped threads along the circumference, and when screwed into a mating internal thread, the second helical elastic deformation section is not helically aligned with the internal thread due to its axial displacement relative to the first threaded section, and the threads having axial sections in the shape of a thin sheet are helically elastically deformed under the action of a further screwing force and then forcibly screwed into the internal thread, thereby achieving frictional anti-loosening and self-locking. The structural member of the invention has a stable self-locking torsion and a high assembly accuracy, can provide a reliable anti-loosening and self-locking torsion, and is not easy to break.

### BRIEF DESCRIPTION OF THE DRAWINGS

In order to illustrate the technical solutions in the embodiments of the invention more clearly, the accompanying drawings necessary in the descriptions of the embodiments will be simply introduced below.
Fig. 1 shows a screw structure with a self-locking function in the prior art;
Fig. 2 shows another screw structure with a self-locking function in the prior art;
Fig. 3 is a schematic structural view of an axial section of an anti-loosening and self-locking structural member machined with a first threaded section and a second helical elastic deformation section and having a tool recess therebetween in the invention; and
Fig. 4 is an enlarged schematic structural view of an axial displacement which is not an integral multiple of the pitch between the first threaded section and the second helical elastic deformation section of the invention.

Indication of the numbers and letters in the Figures:
10. unthreaded rod section 11. cutting groove 20. unthreaded rod section
A. first threaded section B. second helical elastic deformation section
C. tool recess D. axial displacement

### DETAILED DESCRIPTION OF THE INVENTION

The technical solutions in the embodiments of the invention will be clearly and completely described below in conjunction with the drawings in the embodiments of the invention.

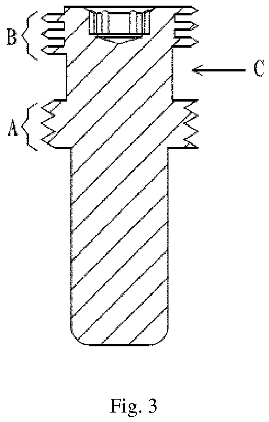

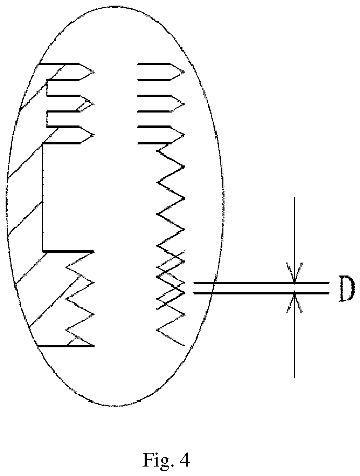

Referring to Fig. 3, the anti-loosening and self-locking structural member of the invention comprises a first threaded section A and a second helical elastic deformation section B arranged on the structural member, wherein the pitch of threads of the second helical elastic deformation section B is identical to that of the first threaded section A, and axial sections of the threads of the second helical elastic deformation section B take the shape of a thin sheet. Referring to Fig. 4, the first threaded section A has an axial displacement D which is not an integral multiple of the pitch relative to the second helical elastic deformation section B, and the axial displacement D may be either shift towards each other or relative shift.

When the structural member is screwed into a mating internal thread, the first threaded section A is smoothly screwed into the mating internal thread and plays a guiding role. When screwed into the internal thread, the second helical elastic deformation section B is not helically aligned with the internal thread due to its axial displacement D which is not an integral multiple of the pitch relative to the first threaded section A, and the thin sheet-shaped threads of the second helical elastic deformation section B are helically elastically deformed along the circumference under the action of a further screwing force and then forcibly screwed into the internal thread, thereby achieving frictional self-locking with the internal thread.

In addition, according to different self-locking requirements of different industries and applications, it is possible to adjust the outer diameter and thickness of the thin sheet-shaped threads of the second helical elastic deformation section B as well as the radial depth of a helical groove between the threads, or to change the shape (e.g. a chamfer or the like) of outer end portions of the thin sheet-shaped threads, or to adjust the distance of the axial displacement D between first threaded section A and the second helical elastic deformation section B so as to meet different self-locking torsion requirements.

Besides, a tool recess C is also arranged between the first threaded section A and the second helical elastic deformation section B, and the diameter of the tool recess C is smaller than the radial extension diameter of the helical groove of the second helical elastic deformation section B. The arrangement of the tool recess C facilitates the machining of the first threaded section A and the second helical elastic deformation section B, and facilitates tool escape and the removal of the burrs of the threads.

The above description of the disclosed embodiments enables those skilled in the art to implement or use the invention. Various modifications to the above embodiments will be apparent to those skilled in the art, and the general principles defined herein may be implemented in other embodiments without departing from the spirit or scope of the invention. Therefore, the invention will not be limited to these embodiments shown herein, but shall accord with the broadest scope consistent with the principles and novel features disclosed herein.

## Claims

1. An anti-loosening and self-locking structural member, comprising a first threaded section and a second helical elastic deformation section arranged on the structural member, wherein the pitch of threads of the second helical elastic deformation section is identical to that of the first threaded section, and axial sections of the threads of the second helical elastic deformation section take the shape of a thin sheet; and the first threaded section has an axial displacement which is not an integral multiple of the pitch relative to the second helical elastic deformation section.

2. The anti-loosening and self-locking structural member according to claim 1, wherein the outer diameter and thickness of the thin sheet-shaped threads of the second helical elastic deformation section as well as the radial depth of a helical groove between the threads are adjustable according to the requirements of the self-locking torsion.

3. The anti-loosening and self-locking structural member according to claim 1 or 2, wherein a tool recess is also arranged between the first threaded section and the second helical elastic deformation section, and the diameter of the tool recess is smaller than the radial extension diameter of the helical groove of the second helical elastic deformation section.

4. The anti-loosening and self-locking structural member according to claim 1, wherein the surface of the structural member is provided with an anti-oxidation and lubricating coating.
